# DEMANDE DE BREVET EUROPEEN

(11) **EP 1 479 540 A1**
(43) Date de publication de la demande: **24.11.2004**
(21) Numéro de dépôt: 04102053.8
(22) Date de dépôt: 12.05.2004
(51) Int. Cl.: B60C 27/06

(54) **Dispositif d'attache pour chaine anti-dérapante**

(30) Priorité: 19.05.2003 FR 0350155
(71) Demandeur: Siepa France S.A., 06510 Le Broc (FR)
(72) Inventeur: Lallement, Olivier, c/o Office Med. de Brevets, 24 rue Massena, 06000 Nice (FR)
(74) Mandataire: Hautier, Jean-Louis

(57) **Abrégé**

La présente invention concerne un dispositif d'attache pour chaîne antidérapante de véhicule automobile ainsi qu'une chaîne équipée de ce dispositif. Ce dispositif d'attache est apte à relier de façon amovible les extrémités d'un câble de fermeture latérale de la chaîne, ledit dispositif comprenant une partie de fixation amovible de l'extrémité libre du câble présentant un organe mobile (9) entre une position de blocage de l'extrémité du câble et une position de déblocage et une partie de fixation permanente de l'autre extrémité du câble. Selon l'invention, l'organe mobile (9) comporte une surface de poussée (17, 18) configurée pour exercer un effort d'extraction sur une surface d'appui solidarisable à l'extrémité libre du câble, lorsque l'organe (9) est déplacé en position de déblocage.

Application aux chaînes pour véhicules automobiles et en particulier aux chaînes anti-dérapantes pour conduite sur neige.

## Description

La présente invention concerne un dispositif d'attache pour chaînes anti-dérapantes de véhicules automobiles ainsi qu'une chaîne anti-dérapante équipée de ce dispositif.

L'invention trouvera particulièrement son application dans le domaine des chaînes pour véhicules automobiles et en particulier des chaînes pour conduite sur neige.

On connaît du document EP-A- 993 970 un système de verrouillage du câble interne d'une chaîne anti -dérapante comportant un système de verrou avec un levier commandé de façon déportée de façon à ouvrir ou fermer le verrou.

Lorsque le verrou est ouvert, des moyens pour pousser l'extrémité du câble suivant son axe sont prévus pour faciliter son retrait. Il s'agit d'un système élastique d'appui avec un ressort.

Le dispositif suivant cette antériorité permet la fixation débrayable de l'extrémité libre d'un câble de chaîne pour automobile et facilite l'extraction de l'extrémité libre lorsqu'on procède à l'ouverture. Cela étant, plusieurs inconvénients sont à noter.

Ainsi, le système d'appui élastique sur l'extrémité libre du câble s'oppose à la force d'introduction lors de l'opération de fermeture. Cela rend moins aisée l'opération de verrouillage.

Le système est par ailleurs complexe et réalisé en plusieurs pièces additionnelles.

En outre, le système de poussée présenté pour faciliter l'extraction opère de façon uniquement axiale en coopération avec un logement axial de réception du câble. C'est uniquement le verrou qui retient axialement l'extrémité libre. Il s'ensuit un surdimensionnement du verrou ou un risque de rupture ou d'ouverture accidentelle.

Il existe donc un besoin de proposer un dispositif d'attache amélioré permettant à la fois une bonne rétention de l'extrémité libre du câble tout en facilitant l'extraction lorsque l'on souhaite procéder à l'ouverture.

L'invention s'inscrit dans ce cadre et propose, pour ce faire, un nouveau dispositif d'attache pour chaîne anti-dérapante de véhicule automobile ainsi qu'une chaîne anti-dérapante équipée.

Selon l'invention, l'organe mobile réalisant le verrouillage de l'extrémité libre comporte une surface de poussée configurée pour exercer un effort d'extraction sur l'extrémité libre du câble. De cette façon, un même organe réalise à la fois la fonction de verrouillage et la fonction de poussée afin de réaliser l'extraction automatique de l'extrémité libre.

Ce faisant, la conception est grandement facilitée et la fiabilité du système est élevée.

D'autres buts et avantages apparaîtront au cours de la description qui suit d'un mode préféré de réalisation de l'invention qui n'est cependant pas limitatif.

La présente invention concerne un dispositif d'attache pour chaîne anti-dérapante de véhicule automobile, apte à relier de façon amovible les extrémités d'un câble de fermeture latérale de la chaîne, ledit dispositif comprenant une partie de fixation amovible de l'extrémité libre du câble présentant un organe mobile entre une position de blocage de l'extrémité du câble et une position de déblocage et une partie de fixation permanente de l'autre extrémité du câble. Selon l'invention, l'organe mobile comporte une surface de poussée configurée pour exercer un effort d'extraction sur une surface d'appui solidarisable à l'extrémité libre du câble, lorsque l'organe est déplacé en position de déblocage.

Suivant des variantes préférées mais non limitatives, ce dispositif est tel que :
- il comporte :
   - un bloc de terminaison solidarisable à l'extrémité libre du câble et portant la surface d'appui,
   - un bloc d'attache sur lequel sont formés la partie de fixation permanente et l'organe mobile,
- le bloc de terminaison comporte une dent apte à coopérer avec une butée du bloc d'attache pour bloquer le bloc de terminaison suivant l'axe du câble,
- la surface de poussée est orientée pour exercer un effort d'extraction sensiblement suivant une direction perpendiculaire à l'axe du câble,
- l'organe mobile comporte une cavité et le bloc de terminaison comporte une projection orientée suivant l'axe du câble, la projection s'insérant dans la cavité en position de blocage,
- la surface de poussée est formée sur une paroi de la cavité,
- l'organe mobile est un levier monté pivotant,
- la projection comporte une partie frontale de poussée de l'organe mobile apte à l'entraîner en rotation en ouverture à l'insertion du bloc de terminaison,
- la parie frontale est un pan incliné apte à pousser un pan incliné de l'organe mobile situé en bordure de la cavité.
- l'organe mobile comporte plusieurs surfaces de poussée.

L'invention concerne également une chaîne anti-dérapante de véhicules automobile comportant un câble de fermeture latérale équipé du dispositif d'attache selon l'invention. Selon l'invention, la chaîne anti-dérapante est telle que :
- l'organe mobile du dispositif d'attache comporte une zone de préhension orientée vers l'intérieur de la surface délimitée par le câble en situation de fermeture,
- l'extrémité libre du câble est montée pivotante suivant l'axe du câble sur la partie de fixation amovible,
- l'autre extrémité du câble est montée pivotante suivant l'axe du câble sur la partie de fixation permanente,
- le mouvement de pivot est limité à une amplitude inférieure à 360°,
- le mouvement de pivot est limité par butée à 90° de part et d'autre d'une position centrale.

Les dessins ci-joints sont donnés à titre d'exemples et ne sont pas limitatifs de l'invention. Ils représentent seulement un mode de réalisation de l'invention et permettront de la comprendre aisément.

La figure 1 présente une partie du dispositif d'attache selon l'invention apte à être reliée à l'extrémité libre du câble.

La figure 2 présente une autre partie du dispositif apte à relier l'autre extrémité du câble et à recevoir un organe mobile.

La fi gure 3 est une vue en perspective éclatée des constituants de l'invention.

Les figures 4 et 5 illustrent deux positions différentes respectivement en opération de déverrouillage et en opération de verrouillage du dispositif de l'invention.

La figure 6 montre un exemple de chaîne anti-dérapante équipée du dispositif d'attache.

Comme cela est visible à la figure 6, une chaîne anti-dérapante pour véhicules automobile comprend généralement un réseau de portions de chaîne apte à s'appliquer sur la bande de roulement du pneu du véhicule. Pour le maintien en position de la chaîne, des éléments latéraux sont prévus et s'appliquent sensiblement sur les flancs du pneu.

En particulier, un élément latéral extérieur est généralement constitué pour la fermeture et la mise sous tension de la chaîne. Un autre élément latéral est également prévu pour coopérer avec le flanc intérieur du pneu. Cet élément intérieur est généralement formé par un câble 4 fixé aux différentes portions de chaînes appliquées sur la bande de roulement et dont les extrémités peuvent être jointes ou désolidarisées pour les opérations de fermeture et d'ouverture.

En particulier, lorsque l'opérateur souhaite la mise en place de la chaîne anti-dérapante, il passe le câble vers la partie intérieure du pneu et ferme le câble pour former un anneau circulaire interne.

Le dispositif d'attache 1 ici présenté s'inscrit dans ce cadre et permet le verrouillage et le déverrouillage facilité des extrémités du câble.

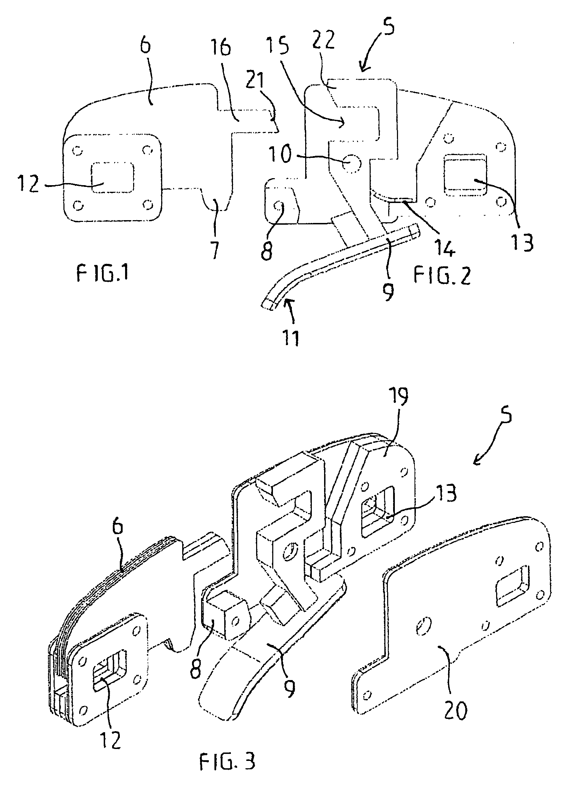

Dans le mode de réalisation représenté aux figures, le dispositif 1 comprend un bloc de terminaison 6 visible en figure 1 et comportant une partie de fixation 12 de l'extrémité libre 2 du câble 4. La partie de fixation pourra être réalisée sous différentes formes et en particulier par une lumière apte à retenir une portion de terminaison du câble 4.

Pour la fixation de l'autre extrémité 3 du câble 4, un bloc d'attache 5 est prévu et comporte une partie de fixation 13 pouvant être de forme similaire à la partie 12.

Les extrémités libre et fixe 2, 3 du câble 4 peuvent être jointes ou désolidarisées par l'intermédiaire des blocs d'attache 5 et de terminaison 6.

A cet effet, le bloc d'attache 5 comporte un organe mobile 9 représenté dans le cas des figures par un levier monté pivotant autour d'un axe 10 sur le bloc d'attache 5. Dans le cas de l'exemple, le levier comporte une zone de préhension 11 permettant l'action manuelle de l'opérateur pour engendrer le pivot. Bien entendu, le dispositif selon l'invention peut également être commandé de façon indirecte par l'intermédiaire d'une câblerie ou de tout autre moyen d'actionnement.

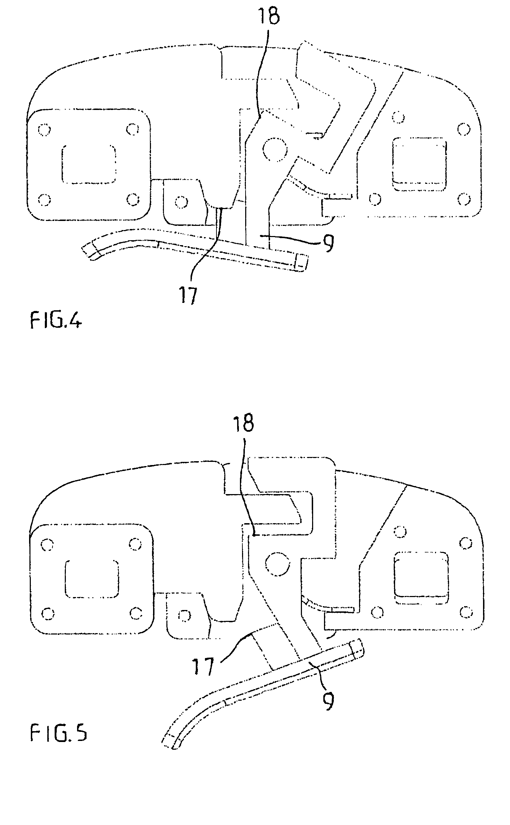

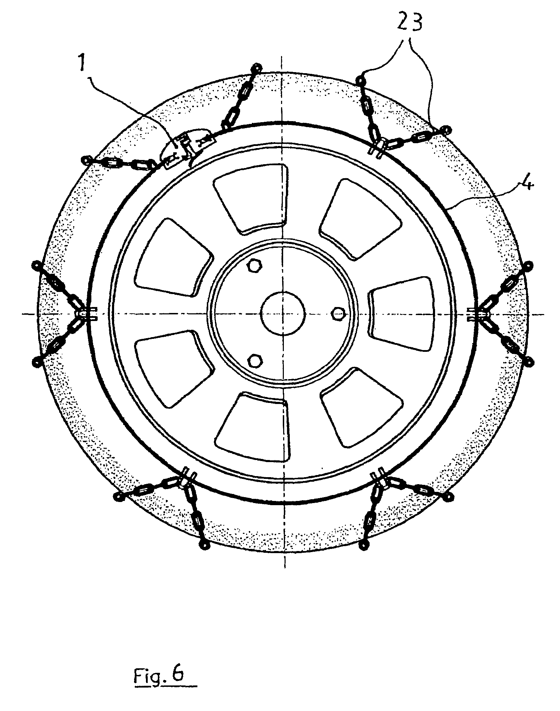

L'organe mobile 9 comporte une surface de poussée 17 telle qu'elle exerce un effort d'extraction sur l'extrémité libre 2 du câble 4 lors d'une opération d'ouverture par déplacement de l'organe mobile 9. Un exemple de surface de poussée est représenté aux figures 4 et 5 au repère 17 par appui sur une surface du bloc de terminaison 6.

On peut constituer plusieurs surfaces de poussée comme cela est représenté également aux figures 4 et 5 avec une surface additionnelle 18 également formée sur l'organe mobile 9.

Dans l'exemple représenté, le dispositif d'attache 5 comporte une butée 8 apte à retenir le bloc de terminaison 6 suivant la direction de l'axe du câble 4. Plus particulièrement, le bloc de terminaison 6 comporte une dent 7 apte à s'insérer au-delà de la butée 8 pour réaliser la rétention. On notera que c'est la butée 8 qui reprend les efforts orientés axialement pour résister à l'ouverture du câble 4 et non pas l'organe mobile 9.

Toujours suivant l'exemple représenté, l'organe mobile 9 comporte une cavité 15 dans laquelle peut s'insérer une projection 16 réalisée sur le bloc de terminaison 6. Cette coopération assure une rétention du bloc de terminaison 6 en cas de pivot de celui-ci.

On observe que, en position d'ouverture, comme cela apparaît de la figure 4, l'organe mobile 9 libère la projection 16, ce qui permet au bloc de terminaison 6 de s'extraire par un mouvement sensiblement perpendiculaire à l'axe du câble, aidé dans cet actionnement par l'effort appliqué par les surfaces de poussée 17, 18.

Suivant l'exemple, l'organe mobile 9 constitué sous forme de levier comprend une lame flexible 14, ou tout autre moyen élastique de rappel, pour maintenir l'organe 9 en position de fermeture par défaut.

Toujours dans le cas représenté, la surface de poussée 18 est réalisée sur l'une des parois de la cavité 15.

En utilisation, lorsque l'utilisateur souhaite fermer le câble de chaîne, il lui suffit de rapprocher les blocs d'attache et de terminaison et d'insérer le bloc de terminaison 6 au-delà de la butée 8. Ce faisant, il maintient l'organe 9 en position d'ouverture.

Lorsque cette opération est effectuée, l'utilisateur relâche l'organe mobile 9 qui revient en position de fermeture par le biais de la lame flexible 14. Dans cette position, la butée 8 retient axialement le bloc de terminaison 6 et tout mouvement de déplacement perpendiculaire ou de pivot du bloc de terminaison 6 est interdit par le biais de l'organe mobile 9 et en particulier par la cavité 15 retenant la projection 16.

En fin d'utilisation, l'opérateur n'a qu'à appliquer une sollicitation sur l'organe mobile 9 pour le passer en position d'ouverture, position dans laquelle la ou les surfaces de poussée 17, 18 exercent un effort tendant à l'extraction du bloc de terminaison 6 relativement à la butée 8.

A ce stade, compte tenu de l'élasticité intrinsèque du câble 4, ce dernier tend à se déployer et l'ouverture s'opère naturellement.

Les figures 1 à 5 montrent qu'il est possible de réaliser le dispositif 1 selon l'invention en un nombre de pièces limité avec un corps 19 pour réaliser la partie de fixation 13 de l'extrémité fixe du câble, corps sur lequel sont montés la butée 8 et l'organe pivotant 9 et apte à être fermé par un capot 20 rapporté par tout moyen de fixation courant.

Suivant l'illustration de la figure 6, la zone de préhension 11 de l'organe mobile 9 est orientée vers l'intérieur du câble 4 en direction de l'axe de la roue du véhicule. Cette configuration évite que cette partie de levier ne soit heurtée par la neige accumulée ou des gravillons qui pourraient accidentellement manoeuvrer la zone de préhension 11 et ouvrir la chaîne pendant le roulage.

Par ailleurs, il est avantageux de laisser une liberté en rotation axiale résiduelle entre les blocs 5 et 6 et les extrémités 2, 3 du câble 4. De cette façon, le dispositif 1 se plaque parfaitement sur le flanc du pneu. Cela étant, on limite ici cette rotation par exemple à une amplitude de 180° (soit 90° de part et d'autre d'une position centrale). Cela peut être réalisé par une butée orientée radialement sur les extrémités 2, 3.

Ainsi, il n'est pas possible que les blocs 5,6 se retrouvent mal orientés l'un par rapport à l'autre lorsque l'on souhaite fermer le câble 4. Dans le même temps, les blocs 5, 6 gardent suffisamment de liberté pour se plaquer sur le flanc du pneumatique. Cette disposition de pivot limité en amplitude peut être mise en oeuvre avec tout dispositif d'attache pour câble 4 de chaîne anti-déparante.

Le mode de réalisation présenté ci-dessus n'est pas limitatif de l'invention. En particulier, un organe mobile 9 peut être réalisé avec un déplacement en translation plutôt qu'un pivot. En outre, le bloc de termi naison 6 solidaire de l'extrémité libre 2 peut être constitué de façon différente.

### REFERENCES

- 1.: Dispositif d'attache
- 2.: Extrémité libre
- 3.: Extrémité fixe
- 4.: Câble
- 5.: Bloc d'attache
- 6.: Bloc de terminaison
- 7.: Dent
- 8.: Butée
- 9.: Organe mobile
- 10.: Axe de pivot
- 11.: Zone de préhension
- 12.: Partie de fixation du câble
- 13.: Partie de fixation du câble
- 14.: Lame flexible
- 15.: Cavité
- 16.: Projection
- 17.: Surface de poussée
- 18.: Surface additionnelle de poussée
- 19.: Corps
- 20.: Capot
- 21.: Partie frontale
- 22.: pan incliné
- 23.: Portions de chaîne

## Revendications

1. Dispositif d'attache (1) pour chaîne anti-dérapante de véhicule automobile, apte à relier de façon amovible les extrémités (2, 3) d'un câble (4) de fermeture latérale de la chaîne, ledit dispositif comprenant une partie de fixation amovible de l'extrémité libre (2) du câble (4) présentant un organe mobile (9) entre une position de blocage de l'extrémité du câble et une position de déblocage et une partie de fixation permanente de l'autre extrémité (3) du câble (4), **caractérisé par le fait**
**que** l'organe mobile (9) comporte une surface de poussée (17, 18) configurée pour exercer un effort d'extraction sur une surface d'appui solidarisable à l'extrémité libre (2) du câble (4), lorsque l'organe (9) est déplacé en position de déblocage.

2. Dispositif selon la revendication 1 **caractérisé par le fait**
**qu'**il comporte :
- un bloc de terminaison (6) solidarisable à l'extrémité libre (2) du câble (4) et portant la surface d'appui,
- un bloc d'attache (5) sur lequel sont formés la partie de fixation permanente et l'organe mobile (9).

3. Dispositif selon la revendication 2 **caractérisé par le fait**
**que** le bloc de terminaison (6) comporte une dent (7) apte à coopérer avec une butée (8) du bloc d'attache (5) pour bloquer le bloc de terminaison (6) suivant l'axe du câble (4).

4. Dispositif selon la revendication 3, **caractérisé par le fait**
**que** la surface de poussée (17, 18) est orientée pour exercer un effort d'extraction sensiblement suivant une direction perpendiculaire à l'axe du câble (4).

5. Dispositif selon les revendications 2, 3 ou 4 **caractérisé par le fait**
**que** l'organe mobile (9) comporte une cavité (15) et que le bloc de terminaison (6) comporte une projection (16) orientée suivant l'axe du câble (4), la projection (16) s'insérant dans la cavité (15) en position de blocage.

6. Dispositif selon la revendication 5 **caractérisé par le fait**
**que** la surface de poussée (18) est formée sur une paroi de la cavité (15).

7. Dispositif selon l'une quelconque des revendications 1 à 6 dans lequel
l'organe mobile (9) est un levier monté pivotant.

8. Dispositif selon la revendication 7 et la revendication 5 en combinaison **caractérisé par le fait**
**que** la projection (16) comporte une partie frontale (21) de poussée de l'organe mobile (9) apte à l'entraîner en rotation en ouverture à l'insertion du bloc de terminaison (6).

9. Dispositif selon la revendication 8 **caractérisé par le fait**
**que** la parie frontale (21) est un pan incliné apte à pousser un pan incliné (22) de l'organe mobile (9) situé en bordure de la cavité (15).

10. Dispositif selon l'une quelconque des revendications 1 à 9 **caractérisé par le fait**
**que** l'organe mobile (9) comporte plusieurs surfaces de poussée (17, 18).

11. Chaîne anti-dérapante de véhicules automobile **caractérisée par le fait**
**qu'**elle comporte un câble (4) de fermeture latérale équipé du dispositif d'attache (1) selon l'une quelconque des revendications 1 à 10.

12. Chaîne anti-dérapante selon la revendication 11 **caractérisée par le fait**
**que** l'organe mobile (9) du dispositif d'attache (1) comporte une zone de préhension (11) orientée vers l'intérieur de la surface délimitée par le câble (4) en situation de fermeture.

13. Chaîne anti-dérapante selon la revendication 11 ou la revendication 12 **caractérisée par le fait**
- **que** l'extrémité libre (2) du câble (4) est montée pivotante suivant l'axe du câble (4) sur la partie de fixation amovible
- **que** l'autre extrémité (3c) du câble (4) est montée pivotante suivant l'axe du câble (4) sur la partie de fixation permanente,
- **que** le mouvement de pivot est limité à une amplitude inférieure à 360°.

14. Chaîne anti-dérapante selon la revendication 13 **caractérisée par le fait**
**que** le mouvement de pivot est limité par butée à 90° de part et d'autre d'une position centrale.
